# DEMANDE DE BREVET EUROPEEN

(11) **EP 1 003 299 A1**
(43) Date de publication de la demande: **24.05.2000**
(21) Numéro de dépôt: 99402842.1
(22) Date de dépôt: 17.11.1999
(51) Int. Cl.: H04B 10/135, H04B 10/18

(54) **Suppression de l'effet brillouin par modulation d'amplitude et brouillage de polarisation**

(30) Priorité: 19.11.1998 FR 9814540; 14.12.1998 FR 9815745
(71) Demandeur: ALCATEL, 75008 Paris (FR)
(72) Inventeur: Brandon, Eric, 92340 Bourg la Reine (FR); Blondel, Jean-Pierre, 78530 Buc (FR)
(74) Mandataire: Lamoureux, Bernard

(57) **Abrégé**

L'invention propose, dans un système de transmission à fibre optique sans répéteurs, de prévoir des moyens de modulation d'amplitude, associés à des moyens de brouillage de la polarisation. Elle permet ainsi de limiter la puissance rétrodiffusée par effet Brillouin, ou d'augmenter la puissance injectée dans la liaison.

L'invention s'applique aussi bien pour les ondes lumineuses transportant l'information que pour ondes lumineuses de pompe.

## Description

La présente invention concerne le domaine des systèmes de transmission par fibres optiques. Plus particulièrement, elle concerne les systèmes de transmission dits "sans répéteurs", et les limitations qu'induit dans ces systèmes l'effet Brillouin. Ces systèmes ou liaisons sans répéteurs sont définis par le fait qu'ils n'utilisent des éléments électriquement actifs que dans les terminaux d'extrémité.

Les liaisons par fibre optique sans répéteurs présentent la particularité de nécessiter, pour atteindre de grandes distances, l'injection dans la fibre optique de très fortes puissances optiques. Deux types d'ondes optiques sont injectés dans la fibre. Le premier type est l'onde de signal, à environ 1550 nm, qui est modulée et porte l'information à transmettre. Le deuxième type d'onde optique est l'onde optique dite de pompe, dans la plage de longueur d'onde 1400-1500 nm, qui est une puissance continue injectée dans la fibre optique, de façon à amplifier le signal.

Il est recherché d'utiliser de très fortes puissances de signal et de pompe (de l'ordre de grandeur du Watt) afin de permettre l'augmentation de la portée de la liaison. Cependant, la puissance de signal et la puissance de pompe qui peuvent être injectées sont limitées par plusieurs effets non-linéaires, notamment l'effet Brillouin, l'effet Kerr et l'effet Raman. Ces effets sont décrits dans l'ouvrage de G.P. Agrawal, Nonlinear Fibre Optics, Academic Press 1980. L'effet Brillouin ou SBS (acronyme de l'anglais "Stimulated Brillouin Scattering", en français diffusion Brillouin stimulée) est généré par la rétrodiffusion de la lumière produite par une source de haute puissance injectée dans la fibre. Cet effet, produit par les interactions photon-phonon est d'autant plus marqué que la lumière de la source de puissance présente une bande étroite. Il a donc déjà été proposé d'élargir le spectre des sources optiques.

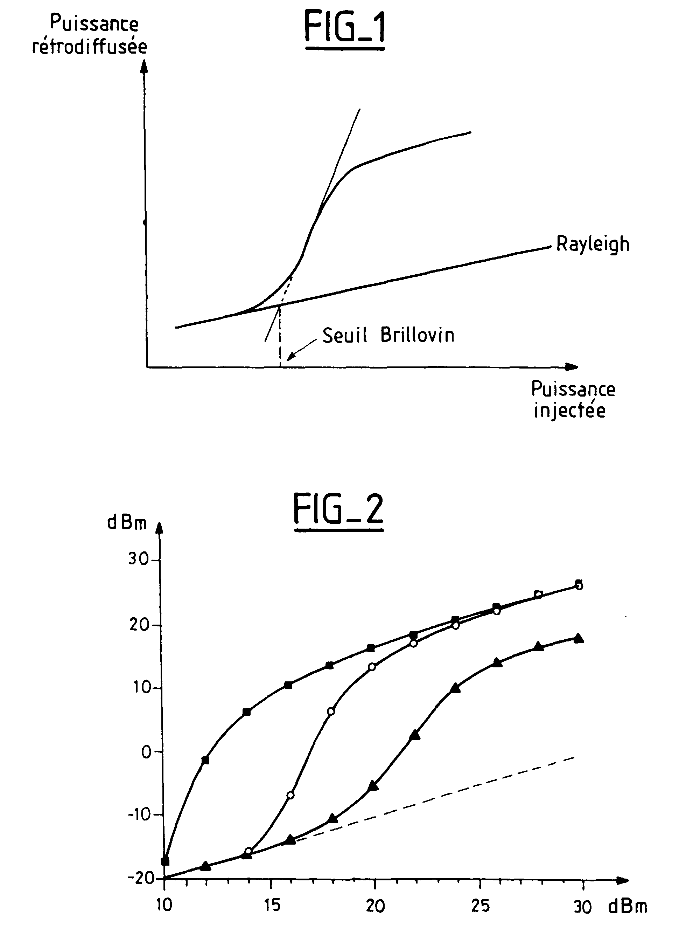

La figure 1 montre un graphe de la puissance rétrodiffusée dans un système de transmission à fibre optique, en fonction de la puissance injectée. La droite marquée "Rayleigh" montre la limite théorique que constitue la rétrodiffusion Rayleigh dans le système. La courbe en traits gras montre la puissance rétrodiffusée effectivement mesurée dans le système de transmission. La courbe s'écarte de la droite de rétrodiffusion Rayleigh lorsque la puissance injectée croît. La tangente à la courbe de puissance rétrodiffusée réelle, dans la partie où elle présente la plus forte pente, coupe la droite de rétrodiffusion Rayleigh en un point dont l'abscisse représente le seuil Brillouin. Ce seuil correspond à la puissance injectée à partir de laquelle l'effet Brillouin est pénalisant dans le système.

S. K. Korotky et al., Efficient phase modulation scheme for suppressing stimulated Brillouin effect scattering, IOOC'95 paper WD2-1 propose d'utiliser un modulateur de phase pour élargir la bande spectrale d'une source injectée dans un système de transmission; le modulateur de phase est excité par une pluralité de sources combinées. Un choix approprié des fréquences des sources combinées permet d'étaler la puissance optique de la source dans la fenêtre de transmission de la fibre utilisée dans le système de transmission. Cet article précise que la modulation de fréquence directe d'un laser injecté dans un système de transmission peut provoquer une modulation d'amplitude substantielle, qui dégrade la performance du système.

K. M. Guild et al., Unrepeated transmission over 415 km at 2,5 Gbit/s with Raman gain and + 26,5 dBm launch power, Electronics Letters, 1996, vol. 32 n° 22, p. 2087-2088 propose de combiner une modulation directe de la source de faible intensité, et une modulation de phase pour diminuer l'effet Brillouin dans un système de transmission sans répéteurs. Le montage proposé permet d'injecter une puissance de + 26,5 dBm, dans un système qui après 392 km présente des performances acceptables.

EP-A-0 720 313 propose un émetteur dans lequel le laser de source est modulé en amplitude. Ce document propose de diminuer les effets de la modulation d'amplitude en injectant le signal modulé du laser dans une amplificateur hautement saturé, qui diminue l'amplitude de modulation. Ce document montre encore le préjugé à l'encontre de l'utilisation d'une modulation d'amplitude pour diminuer l'effet Brillouin.

R. H. Stolen, Polarization effects in fiber Raman and Brillouin lasers, Journal of Quantum Electronics, vol. QE-15 no. 10, Octobre 1979 décrit que les gains Raman et Brillouin sont deux fois plus élevés dans des fibres lorsque la polarisation est maintenue. Dans des fibres typiques longues, qui ne maintiennent pas une polarisation linéaire, le gain Brillouin prend une valeur qui est environ deux fois plus faible que dans le cas d'une polarisation linéaire constante. Cet article propose une explication et une démonstration expérimentale de ce fait, dans le but d'obtenir pour des lasers un fort gain Brillouin.

JP-A-8 116 310 décrit un brouilleur de polarisation; dans ce document, on applique successivement une modulation de phase, puis un brouillage de polarisation. Ce document est un exemple d'un brouilleur de polarisation classique, tel qu'utilisé notamment dans les systèmes de transmission à répéteurs.

L'invention propose une solution permettant d'augmenter la puissance dans une liaison sans répéteurs, en surmontant les limitations dues à l'effet Brillouin. L'invention propose une solution qui va à l'encontre du préjugé classique contre l'utilisation d'une modulation d'amplitude du signal émis.

Plus précisément, l'invention propose un système de transmission à fibres optiques sans répéteurs présentant des moyens de modulation de l'amplitude et des moyens de brouillage de la polarisation des ondes lumineuses injectées dans le système.

Dans un mode de réalisation, les moyens de modulation de l'amplitude et des moyens de brouillage de la polarisation agissent sur les ondes transportant l'information.

Dans un autre mode de réalisation, les moyens de modulation de l'amplitude et des moyens de brouillage de la polarisation agissent sur les ondes de pompe.

Avantageusement, les moyens de brouillage de la polarisation comprennent un brouilleur de polarisation à haute fréquence.

De préférence, le brouilleur de polarisation module la polarisation à une fréquence supérieure à 100 MHz.

Dans un mode de réalisation, le brouilleur de polarisation module la polarisation à une fréquence deux fois supérieure au débit.

Les moyens de brouillage de la polarisation peuvent aussi comprendre un brouilleur de polarisation dans le domaine spatial.

Dans un mode de réalisation, les ondes lumineuses sont émises par une source, et les moyens de modulation de l'amplitude modulent l'amplitude du courant d'alimentation de la dite source.

Avantageusement, les moyens de modulation de l'amplitude modulent à une fréquence comprise entre quelques dizaines et quelques centaines de kHz.

D'autres caractéristiques et avantages de l'invention apparaîtront à la lecture de la description qui suit de modes de réalisation de l'invention, donnée à titre d'exemple et en référence aux dessins annexés, qui montrent :
- figure 1, une définition graphique du seuil Brillouin;
- figure 2, un graphe de la puissance rétrodiffusée en fonction de la puissance injectée, dans une fibre.

L'invention propose, dans un système de transmission à fibres optiques sans répéteurs, de combiner une modulation d'amplitude et un brouillage de polarisation de sorte à limiter la perte par rétrodiffusion par effet Brillouin. Elle permet ainsi d'augmenter la puissance injectée dans la liaison.

La figure 2 montre un graphe de la puissance rétrodiffusée en fonction de la puissance injectée; les abscisses comme les ordonnées sont graduées en dBm. On a représenté sur la figure le cas d'un signal NRZ (non-retour à zéro) à 2,5 Gbit/s, injecté dans une fibre NZDSF (fibre à dispersion décalée sans annulation de la dispersion chromatique dans la plage de longueurs d'onde du signal injecté) d'une longeur de 50 km. Les données injectées forment une suite de symboles binaires équiprobables. La source est un laser émettant un signal continu à 1560 nm; l'information est apportée au signal au moyen d'une modulation d'amplitude dite externe, du type Mach Zender.

Le graphe en pointillés représente la rétrodiffusion Rayleigh dans la fibre, à un niveau de -30 dB, qui est la valeur minimale de puissance rétrodiffusée.

Le graphe en carrés représente la puissance rétrodiffusée sans modulation ni d'amplitude ni de phase, autrement dit pour une simple modulation du signal par les données. Comme le montre la figure, le seuil Brillouin, ou seuil SBS, tel que défini en référence à la figure 1, est à environ + 10 dBm.

Le graphe en cercles représente la puissance rétrodiffusée pour une modulation basse fréquence du courant du laser; dans l'exemple, la modulation est une modulation à 40 kHz, sur une profondeur de modulation de 5%. La figure 2 montre que dans ce cas la puissance susceptible d'être injectée dans la fibre pour rester en dessous du seuil SBS est de l'ordre de 15 dBm.

Le graphe en triangles représente la puissance rétrodiffusée selon l'invention, avec une modulation d'amplitude couplée à un brouillage de polarisation. La modulation d'amplitude s'effectue sur le laser, comme dans le cas du graphe en cercles décrit ci-dessus; le brouillage de polarisation s'effectue par modulation haute fréquence de la polarisation, dans un brouilleur de polarisation de type connu en soi. La fréquence du brouillage est de 5 GHz. Le graphe montre que la puissance susceptible d'être injectée dans la liaison est de l'ordre de 18 dBm.

Par rapport au graphe en cercle, l'utilisation d'une modulation d'amplitude couplée à un brouillage de polarisation, et non pas seulement d'une modulation d'amplitude permet un gain de l'ordre de 3 dBm.

Par rapport au graphe en carré, l'utilisation d'une modulation d'amplitude couplée à un brouillage de polarisation permet un gain de l'ordre de 8 dBm

Selon l'invention, on procède à une modulation d'amplitude du signal injecté. Cette modulation d'amplitude s'effectue par exemple par modulation du courant d'alimentation de la source lumineuse utilisée. Cette modulation est avantageusement une modulation basse fréquence, i. e. à une fréquence de l'ordre de quelques dizaines à quelques centaines de kHz. Idéalement, la fréquence de modulation doit être en dehors de la bande électrique du récepteur utilisé dans la liaison; elle est typiquement de 0 à quelques kHz pour un récepteur fonctionnant à 2,5 Gbit/s.

La profondeur de modulation est avantageusement de l'ordre de quelques pourcents. Une telle profondeur de modulation assure que la modulation d'amplitude n'affecte pas la qualité de la transmission.

L'invention propose d'associer la modulation d'amplitude à un brouillage de polarisation des signaux injectés dans la fibre. Les moyens de brouillage de la polarisation utilisés selon l'invention peuvent être de tout type, et notamment peuvent agir dans le domaine temporel. On peut ainsi utiliser pour la mise en oeuvre de l'invention des brouilleurs de polarisation à haute fréquence; on peut aussi agir dans le domaine spatial.

Les brouilleurs de polarisation à haute fréquence modulent les signaux lumineux à une fréquence qui est de préférence au moins deux fois supérieure au débit, dans le cas d'un signal NRZ; en valeur absolue, une limite inférieure de la fréquence de modulation de 100 MHz est avantageuse. Ces brouilleurs induisent en conséquence un élargissement du spectre du signal transmis. Ceci ne pose pas de problèmes dans le cas des liaisons avec répéteurs, dans lesquelles les filtres sont larges. Pour des liaisons sans répéteurs, comme celles de l'invention, sont prévues des filtres de réception aussi étroits que possibles, et l'utilisation de brouilleurs de polarisation à haute fréquence va à l'encontre des préjugés de l'homme du métier. De fait l'élargissement du spectre induit pour l'homme du métier une dégradation de la sensibilité de la liaison.

Il s'avère néanmoins que l'utilisation de brouilleurs de polarisation à haute fréquence, même avec un filtre de réception plus large, permet selon l'invention d'améliorer les performances de la liaison. L'invention propose à cette fin d'utiliser en réception un filtre élargi pour tenir compte de l'existence du brouillage de polarisation; un filtre qui est au moins aussi large que la modulation appliquée convient. Pour des signaux à 1555 nm, avec un débit de 10 Gbit/s, on peut typiquement pour brouiller la polarisation appliquer une modulation haute fréquence autour de 20 GHz. Dans ce cas, le filtre de réception présente avantageusement une largeur de l'ordre de 0,5 nm, à comparer à une largeur de 0,3 nm dans un système de l'art antérieur.

Plus schématiquement, l'élargissement du filtre de réception, d'un facteur deux, induit une perte de l'ordre de 0,5 dB; l'augmentation de la puissance injectée grâce à l'invention est de l'ordre de 3 dB, ce qui compense largement les pertes dues à un filtre de réception plus large.

Dans le domaine spatial, on peut procéder au brouillage de la polarisation par tout moyen connu, et notamment en utilisant des dispositifs passifs biréfringents permettant de dépolariser la lumière.

Les moyens de brouillage de polarisation peuvent être disposés immédiatement après la source lumineuse; de préférence, ils sont disposés avant que l'effet Brillouin ne présente une amplitude sensible, i. e. au début de la liaison dans le cadre d'un système sans répéteurs.

L'invention a été décrite en référence à la figure 2 dans son application à un signal modulé, typiquement à un signal à une longueur d'onde de l'ordre de 1550 nm. Elle pourrait aussi s'appliquer à un signal de pompe, par exemple à un signal de pompe autour de 1480 nm; elle permet aussi dans ce cas un gain de l'ordre de 3 dB sur la puissance injectée dans la liaison.

## Revendications

1. Un système de transmission à fibres optiques sans répéteurs présentant des moyens de modulation de l'amplitude et des moyens de brouillage de la polarisation des ondes lumineuses injectées dans le système.

2. Le système selon la revendication 1, caractérisé en ce que les moyens de modulation de l'amplitude et des moyens de brouillage de la polarisation agissent sur les ondes transportant l'information.

3. Le système selon la revendication 1 ou 2, caractérisé en ce que les moyens de modulation de l'amplitude et des moyens de brouillage de la polarisation agissent sur les ondes de pompe.

4. Le système selon la revendication 1, 2 ou 3, caractérisé en ce que les moyens de brouillage de la polarisation comprennent un brouilleur de polarisation à haute fréquence.

5. Le système selon la revendication 4, caractérisé en ce que le brouilleur de polarisation module la polarisation à une fréquence supérieure à 100 MHz.

6. Le système selon la revendication 4, caractérisé en ce que le brouilleur de polarisation module la polarisation à une fréquence deux fois supérieure au débit.

7. Le système selon la revendication 1, 2 ou3, caractérisé en ce que les moyens de brouillage de la polarisation comprennent un brouilleur de polarisation dans le domaine spatial.

8. Le système selon l'une des revendications 1 à 5, caractérisé en ce que les ondes lumineuses sont émises par une source, et en ce que les moyens de modulation de l'amplitude modulent l'amplitude du courant d'alimentation de la dite source.

9. Le système selon la revendication 8, caractérisé en ce que les moyens de modulation de l'amplitude modulent à une fréquence comprise entre quelques dizaines et quelques centaines de kHz
